# EUROPEAN PATENT SPECIFICATION

(11) **EP 3 144 232 B1**
(45) Date of publication and mention of the grant of the patent: **14.11.2018**
(21) Application number: 16189068.6
(22) Date of filing: 15.09.2016
(51) Int. Cl.: B65B 35/20, B65B 57/00, B65B 57/14, B65G 43/02, B65B 49/08, B65B 57/16, B65G 11/02, B65B 11/18

(54) **PACKAGING APPARATUS**
VERPACKUNGSVORRICHTUNG
APPAREIL D'EMBALLAGE

(30) Priority: 18.09.2015 JP 2015185128
(43) Date of publication of application: 22.03.2017
(73) Proprietor: ISHIDA CO., Ltd., Kyoto-shi, Kyoto 606-8392 (JP)
(72) Inventor: Hirata, Kosuke, Shiga, 520-3026 (JP); Tai, Yuuki, Shiga, 520-3026 (JP)
(74) Representative: Gill Jennings & Every LLP

(56) References cited:
- JP-A- 2013 018 498
- US-A1- 2011 198 194

## Description

### TECHNICAL FIELD

The present disclosure relates to a packaging apparatus.

### BACKGROUND

In conventional art, a known packaging apparatus is a packaging apparatus including a placing unit on which an object to be packaged is placed, a packaging unit configured to package the object to be packaged, and a conveyance unit configured to convey the object to be packaged from the placing unit to the packaging unit, wherein the object to be packaged that is placed on the placing unit is conveyed by the conveyance unit to the packaging unit, and the object to be packaged is packaged in the conveyed position by the packaging unit. As such a packaging apparatus, for example, Patent Document 1 (Japanese Unexamined Patent Publication No. 2013-18498) discloses a packaging apparatus including a detector configured to detect an overload in the conveyance unit. When the detector detects a load of a certain value or more in the conveyance unit, the packaging apparatus judges the state to be an overload state, and switches the operation to a mode to reduce the load in the conveyance unit.

### SUMMARY

In packaging apparatuses as described above, when the detector detects a load of a certain value or more in the conveyance unit, the packaging apparatus generally judges that the conveyance unit is in the overload state and stops the operation of the conveyance unit, to improve the safety.

However, in the conventional packaging apparatuses, although the load (conveying load) applied onto the conveyance unit fluctuates in accordance with the operation of the conveyance unit, a reference load to judge the overload state is set based on the maximum load among them. Accordingly, it may cause a state in which a difference (surplus load) between the reference load and the conveying load increases in conveyance, that is, a state the load applied onto the conveyance unit is hard to reach the reference load and deteriorates the safety.

An object of an aspect of the present disclosure is to enhance the safety in conveyance.

A packaging apparatus according to an aspect of the present disclosure includes a placing unit on which an object to be packaged is placed, a packaging unit configured to package the object to be packaged, a conveyance unit configured to convey the object to be packaged that is placed on the placing unit to the packaging unit, a detector configured to acquire a conveying load applied onto the conveyance unit, and a judging unit configured to judge that the conveyance unit is in an overload state when the conveying load acquired by the detector is equal to or higher than a reference load, the packaging apparatus further comprising a measuring scale configured to measure the weight of the object to be packaged, or a film sensor configured to sense whether the object to be packaged is packaged with a film, and wherein the judging unit is adapted to set the reference load at least in two levels, a first reference value and a second reference value that is a load different from the first reference value, wherein the reference load is set in accordance with the corresponding weight of the object to be packaged whether the object to be packaged is packaged with a film.

The packaging apparatus having the configuration described above is capable of adjusting the reference load at least in two levels, the first reference value and the second reference value that is a load different from the first reference value. With the configuration, in the judging unit, the surplus load has a proper value in comparison with the case where the reference value is set to the fixed value. This configuration enables proper judgment that the conveyance unit is in the overload state. Consequently, this configuration enhances the safety in conveyance.

In one embodiment, the adjustment of the reference load may include setting the reference load such that the reference load changes while the conveyance unit is conveying the object to be packaged.

With the packaging apparatus having the configuration described above, the judging unit is enabled to judge that the conveyance unit is in the overload state using a proper reference load in accordance with the operation of the conveyance unit, even when the conveying load fluctuates while the conveyance unit is conveying the object to be packaged. Consequently, this configuration enhances the safety in conveyance.

In one embodiment, the adjustment of the reference load may include setting the reference load for each conveyance performed by the conveyance unit.

With the packaging apparatus having the configuration described above, the judging unit is enabled to judge that the conveyance unit is in the overload state using a proper reference load in accordance with the operation of the conveyance unit, even when the conveying load fluctuates for each conveyance performed by the conveyance unit. As a result, the safety in conveyance can be enhanced.

In one embodiment, the reference load may be set in accordance with a load factor changing a conveyance load applied onto the conveyance unit.

The conveyance load applied onto the conveyance unit changes according to a physical factor (load factor) relating to the conveyance unit or the object to be packaged. With the packaging apparatus having the configuration described above, the judging unit is enabled to judge that the conveyance unit is in the overload state using a proper reference load in accordance with the physical factor (load factor) relating to the conveyance unit or the object to be packaged. As a result, the safety in conveyance can be enhanced.

In one embodiment, the load factor may be a weight of the object to be packaged.

The conveyance load applied onto the conveyance unit changes according to the weight of the object to be packaged. With the packaging apparatus having the configuration described above, the judging unit is enabled to judge that the conveyance unit is in the overload state using a proper reference load in accordance with the weight of the object to be packaged. As a result, the safety in conveyance can be enhanced.

In one embodiment, the load factor may be operation details of the conveyance unit.

The conveyance load applied onto the conveyance unit changes according to the operation details of the conveyance unit. With the packaging apparatus having the configuration described above, the judging unit is enabled to judge that the conveyance unit is in the overload state using a proper reference load in accordance with the operation details of the conveyance unit. As a result, the safety in conveyance can be enhanced.

In one embodiment, the packaging apparatus may further include a control unit configured to stop the operation of the conveyance unit when the judging unit judges that the conveyance unit is in the overload state.

With the packaging apparatus having the configuration described above, the control unit stops the operation of the conveyance unit, when the judging unit judges that the conveyance unit is in the overload state. This configuration further enhances the safety in conveyance.

According to an aspect of the present disclosure, the safety in conveyance can be enhanced.

### BRIEF DESCRIPTION OF THE DRAWINGS

FIG. 1 is an external perspective view illustrating a packaging apparatus according to one embodiment;
FIG. 2 is a schematic front view illustrating the inside of the packaging apparatus in FIG. 1;
FIG. 3 is a schematic cross-sectional view taken along the line III-III, viewed in the direction of the arrows in FIG. 2;
FIG. 4 is a block diagram illustrating a configuration of the packaging apparatus in FIG. 1;
FIG. 5 is a diagram illustrating an example of adjustment of a reference load; and
FIG. 6 is a diagram illustrating another example of adjustment of the reference load.

### DETAILED DESCRIPTION

One embodiment will now be described with reference to the drawings. In the description of the drawings, like or corresponding elements are designated by like numerals, and duplicate description is omitted.

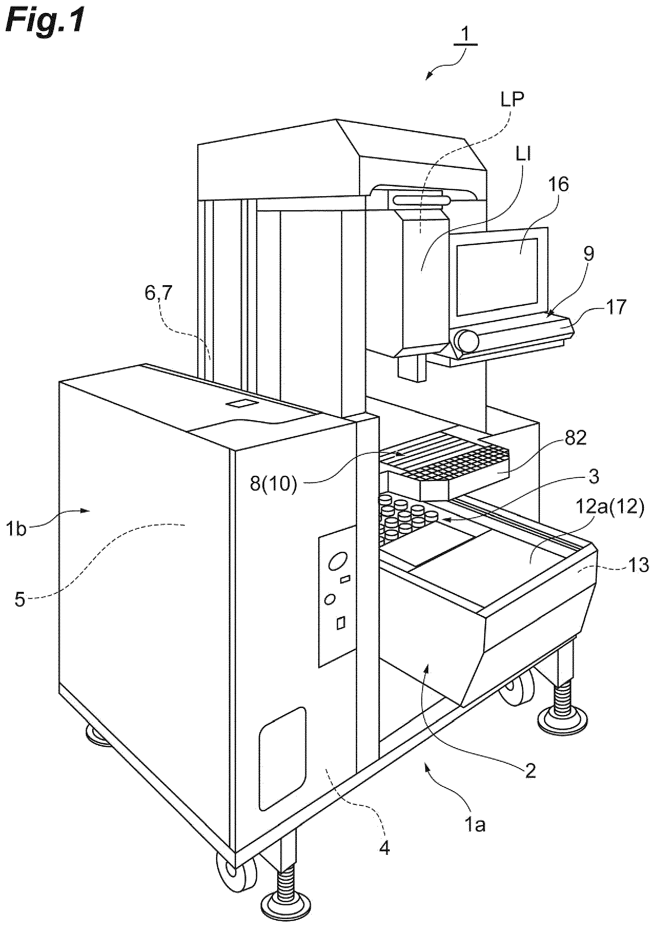

As depicted in FIG. 1 to FIG. 3, a packaging apparatus 1 is an apparatus configured to film-package an object (object to be packaged) W including a product G such as a food product and a tray T on which the product G is placed. The packaging apparatus 1 packages an object W with a film F by pushing up the object W against a film F that is tensionally held and folding peripheral portions of the film F over the bottom side of the tray T. The packaging apparatus 1 includes a measuring function and a price-labeling function of affixing labels in addition to the film-packaging function.

The packaging apparatus 1 includes a measuring carrying-in mechanism 2, a packaging station 3, a roll holding mechanism 4, a film delivery mechanism 5, a film conveyance mechanism 6, a cutter mechanism 7, a seal mechanism 8, a label printer LP, a label issuing device LI, and a control unit 9. The respective mechanisms included in the packaging apparatus 1 are accommodated in a body 1a and a casing 1b of the packaging apparatus 1. The casing 1b is attached to a side portion of the body 1a.

In the description of the present embodiment, "right and left" mean right and left when facing the front of the body 1a of the packaging apparatus 1. The front side of the packaging apparatus 1 in the front-back direction is called "near side", and the side opposite thereto is called "far side". The expression "film F1, F2" means either one optionally selected from a film F1 and a film F2, and is also simply called a film F. The expression "film roll R1, R2" means either one optionally selected from a film roll R1 and a film roll R2. The terms "upstream" and "downstream" mean upstream of the film F in the conveying direction and downstream thereof in the conveying direction, respectively. The expression "load" includes the meaning of the magnitude of the load (load amount).

### Whole Configuration of Packaging Apparatus 1

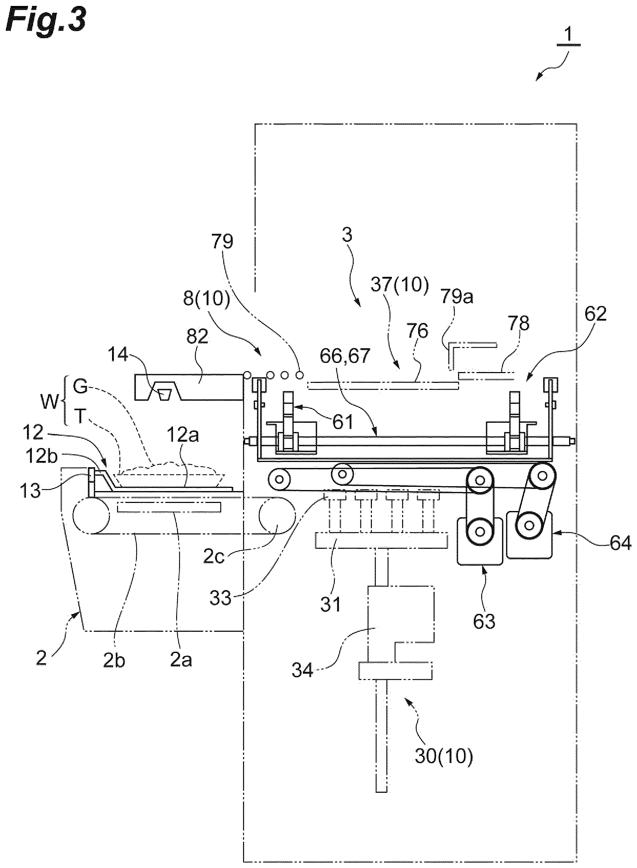

As depicted in FIG. 3, the measuring carrying-in mechanism 2 has a measuring scale 2a, a carrying-in belt (conveyance unit) 2b, a driving unit (conveyance unit) 2c, a measuring plate (placing unit) 12, a conveying bar (conveyance unit) 13, and a camera 14. The measuring scale 2a measures the weight of an object W placed on the measuring plate 12, and outputs information on the weight of the object W to the control unit 9.

The carrying-in belt 2b is looped over a pair of rollers. The carrying-in belt 2b is driven by the driving unit 2c. The driving unit 2c is, for example, an electric motor electrically connected with the control unit 9 described later. The control unit 9 controls operations and stopping of the driving unit 2c.

The carrying-in belt 2b is provided with a conveying bar 13 for conveying the object W. The conveying bar 13 extends along the width direction of the measuring plate 12, and is positioned on the near side of the measuring plate 12 in an initial position. The conveying bar 13 moves toward the far side while being driven by the carrying-in belt 2b driven by the driving unit 2c, and pushes the object W toward the far side. The conveying bar 13 conveys the object W placed on the measuring plate 12 to the packaging unit 10.

The measuring plate 12 is a tray having a shape of a rectangular shallow vessel on which the object W is placed. The measuring plate 12 includes a placing surface 12a on which the object W is placed. A hook portion (raised portion) 12b raised with respect to the placing surface 12a is provided outside (near side in this example) the placing surface 12a in the measuring plate 12. The hook portion 12b is a portion serving as a reference level when the tray T is placed on the measuring plate 12. The hook portion 12b is provided to be connected with the near side of the placing surface 12a via a stepped portion, and disposed above the placing surface 12a. In this example, a plurality of hook portions 12b are arranged to be aligned along a left-and-right direction at predetermined intervals as viewed from above.

The camera 14 photographs an image of the object W placed on the measuring plate 12. The camera 14 is disposed above the measuring plate 12. In the illustrated example, the camera 14 is disposed to face downward at a discharge table 82 provided above the measuring plate 12, and configured to photograph an image of a predetermined region including the object W in the measuring plate 12 as a photographed image. The camera 14 outputs image information relating to the photographed image to the control unit 9. A CCD camera or a CMOS camera may be used as the camera 14.

The packaging station 3 is a space formed in the body 1a. The packaging station 3 is a space in which a series of film-packaging processes are performed on an object W the weight of which is measured by the measuring carrying-in mechanism 2. In the packaging station 3, a lifter mechanism 30 and a folding mechanism 37 are disposed. The lifter mechanism 30 and the folding mechanism 37 form the packaging unit 10 configured to package the object W.

The lifter mechanism 30 is provided in a lower portion of the packaging station 3. The lifter mechanism 30 includes a plurality of support members 33 capable of receiving the bottom surface of a tray T. In the lifter mechanism 30, a support base 31 fixed to the support members 33 is moved upward by a motor-driven ball screw mechanism 34. Consequently, the lifter mechanism 30 holds the bottom surface of the tray T and moves the object W upward. The lifter mechanism 30 pushes up the object W against a film (stretch film) F1, F2 that is tensionally held by the film conveyance mechanism 6.

The folding mechanism 37 folds the periphery of the film F1, F2 over the bottom side of the object W (i.e., the bottom side of the tray T) pushed up by the lifter mechanism 30 to cover the object W with the film F1, F2. The folding mechanism 37 folds both ends of the film F1, F2 in the film conveying direction over the bottom side of the tray T with right and left folding plates 76 and 77. The folding mechanism 37 folds a side portion of the film F1, F2 on the far side in the width direction over the bottom side of the tray T with a rear folding plate 78. When the tray T is discharged toward the seal mechanism 8 by a discharging pusher 79a, the folding mechanism 37 folds a side portion of the film F1, F2 on the near side in the width direction over the bottom side of the tray T with a front folding bar 79.

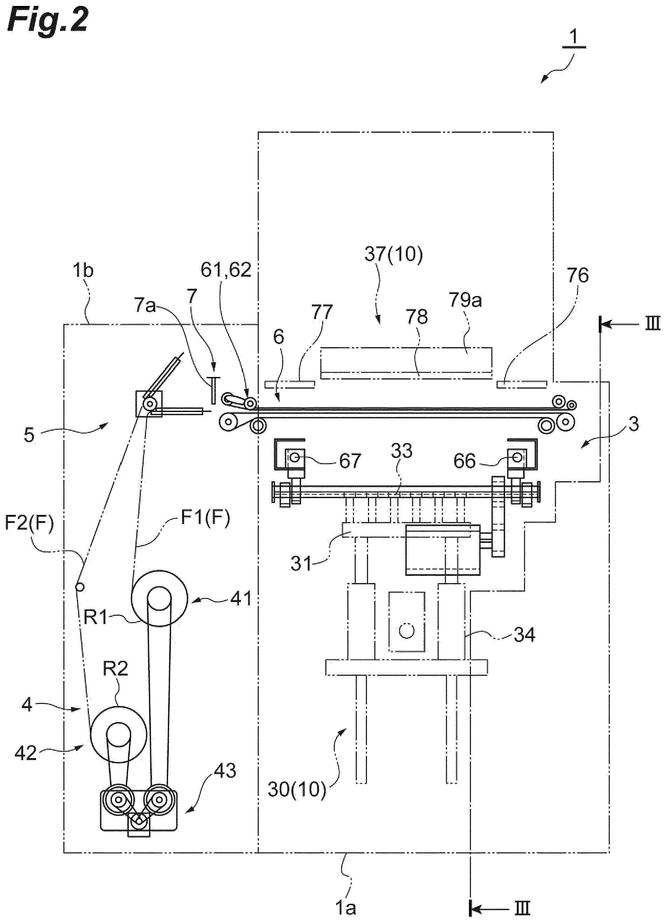

The roll holding mechanism 4 is disposed in the casing 1b as depicted in FIG. 1 and FIG. 2. The roll holding mechanism 4 is configured to hold two film rolls R1 and R2 that are of the same type or of different types. On the film rolls R1 and R2, films F1 and F2 having a predetermined width are wound multiple times, respectively.

As depicted in FIG. 2, the roll holding mechanism 4 includes an upper-roll holding unit 41 configured to hold the film roll R1, a lower-roll holding unit 42 configured to hold the film roll R2, and a roll drive unit 43. The roll drive unit 43 is configured to cause the upper-roll holding unit 41 and the lower-roll holding unit 42 to selectively rotate to pay out the film F1 or the film F2 from either one of the film rolls R1 and R2.

The film delivery mechanism 5 is configured to transfer the film F1 pulled out from the film roll R1 or the film F2 pulled out from the film roll R2 to a pair of feeder units 61 and 62 of the film conveyance mechanism 6. The film delivery mechanism 5 is disposed in the casing 1b.

As depicted in FIG. 2 and FIG. 3, the film conveyance mechanism 6 receives the film F from the film delivery mechanism 5 and conveys the film F to the packaging station 3. The film conveyance mechanism 6 also tensionally holds the film F received from the film delivery mechanism 5 in a central area of the packaging station 3. The film conveyance mechanism 6 includes the first feeder unit 61, the second feeder unit 62, a first feeder movement unit 63, and a second feeder movement unit 64.

The first feeder unit 61 and the second feeder unit 62 hold both end portions of the film F in the width direction with belts. A longitudinal side portion of the first feeder unit 61 is provided with a slide shaft 66 extending in the width direction of the film F. The first feeder unit 61 is supported by the slide shaft 66. The first feeder unit 61 is driven by the first feed movement unit 63, to be moved in the film-width direction along the slide shaft 66, and to convey the film F. A longitudinal side portion of the second feeder unit 62 is provided with a slide shaft 67 extending in the width direction of the film F. The second feeder unit 62 is supported by the slide shaft 67. The second feeder unit 62 is driven by the second feeder movement unit 64, to be moved in the film-width direction along the slide shaft 67, and to convey the film F.

As depicted in FIG. 2, after the film delivery mechanism 5 transfers the film F to the film conveyance mechanism 6, the cutter mechanism 7 cuts the film F stretched between the film delivery mechanism 5 and the film conveyance mechanism 6. After the film conveyance mechanism 6 conveys the film F of a predetermined length, the cutter mechanism 7 cuts the film F stretched between the film delivery mechanism 5 and the film conveyance mechanism 6. The cutter mechanism 7 is disposed between the film delivery mechanism 5 and the film conveyance mechanism 6. The cutter mechanism 7 has a cutting blade 7a that is longer than the film width of the film F. The cutting blade 7a is moved vertically by an actuator.

The seal mechanism 8 heat-seals the film F that is folded by the folding mechanism 37. The seal mechanism 8 has a conveying roller and heating roller. In the seal mechanism 8, an object W pushed out by the discharging pusher 79a is conveyed by the conveying roller and the heating roller. The seal mechanism 8 heat-seals the film F of the object W conveyed by the conveying roller and the heating roller. The seal mechanism 8 discharges the object W thus packaged toward the discharge table 82.

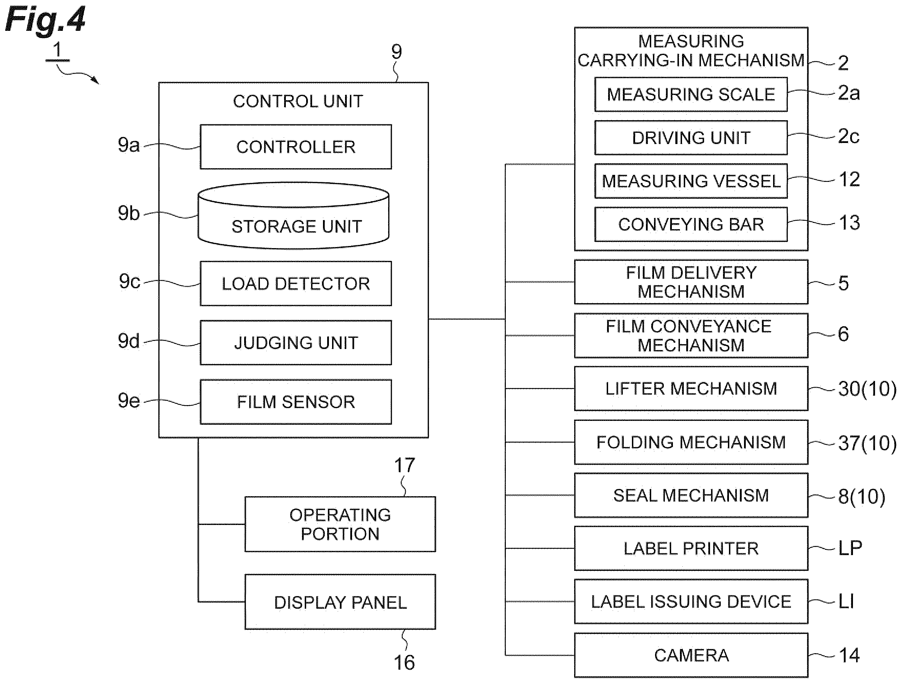

As depicted in FIG. 1 and FIG. 4, the label printer LP prints information about goods on a label. Examples of the information about goods include a product name and price. The label issuing device LI pastes the label printed by the label printer LP on the discharged packaged product.

The control unit 9 is a computer disposed in an upper portion of the body 1a. The control unit 9 controls operation of each mechanism described above. The control unit 9 has an input/output interface I/O configured to perform signal input and output from and to the outside, a read only memory (ROM) in which a program and information, for example, for performing processes are stored, a random access memory (RAM) configured to temporarily store therein data, a recording medium such as a hard disk drive (HDD), a central processing unit (CPU), and a communication circuit, for example. The control unit 9 implements each function, based on signals output by the CPU, by storing input data in the RAM, loading the program stored in the ROM into the RAM, and executing the program loaded in the RAM.

The control unit 9 is connected with a display panel 16 and an operating portion 17. The display panel 16 is a touch-panel display, for example. Operation buttons are also displayed on the display. With the operating portion 17, a user performs various operations and inputs.

The control unit 9 includes a controller 9a, a storage unit 9b, a load detector (detector) 9c, a judging unit 9d, and a film sensor 9e. The controller 9a controls operation or stopping of the driving unit 2c. The controller 9a controls operation or stopping of the driving unit 2c, for example, by adjusting the current (applied current) flowing through the driving unit 2c in accordance with an operating pattern (described later) of the driving unit 2c stored in advance in the storage unit 9b. When the judging unit 9d judges that the driving unit 2c is in the overload state, the controller 9a stops the operation of the driving unit 2c, for example, by shutting off the current flowing through the driving unit 2c.

The storage 9b stores various types of data that are predetermined. The various types of data may be data input from the display panel 16 or the operating portion 17, for example, or transferred from an external device. The various types of data include data on properties (thickness, material, film width, etc.) of a plurality of types of films F, data on unit price data and properties of a plurality of types of products G, data on properties (size, shape, material, tare weight, etc.) of a plurality of types of trays T.

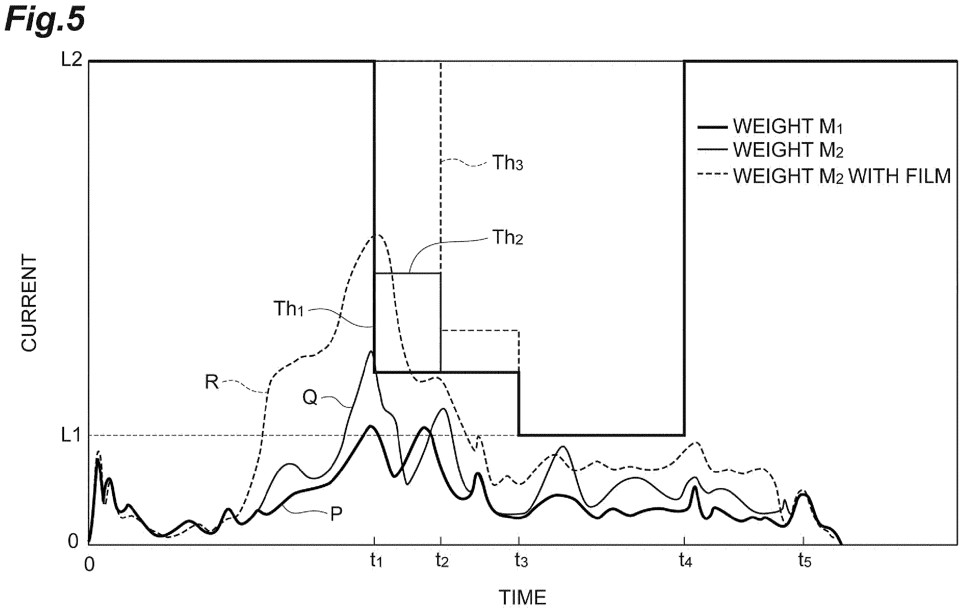

The various types of data include a reference load serving as a threshold of the load to judge that the driving unit 2c is in the overload state. The values that the reference load can have include, for example, a first reference value L1 and a second reference value L2. An example of the state in which the driving unit 2c is in the overload state is a state in which the continuous time for which the applied current of the driving unit 2c exceeds the reference load continues and exceeds a certain time. The applied current of the driving unit 2c corresponds to the load of the driving unit 2c corresponding to the force applied onto the conveying bar 13 as a reaction to the force of the conveying bar 13 pushing out the object W. As an example, in the example of FIG. 5, the first reference value L1 is a current value that is larger by a predetermined surplus load value than the maximum value of the applied current of the driving current 2c at the time when the object W is conveyed from the measuring plate 12 toward the packaging unit 10 at substantially fixed speed in the period from time t₃ to time t₄. The second reference value L2 is a load different from the first reference value L1. The second reference value L2 may be larger than the first reference value L1, or smaller than the first reference value L1. The first reference value L1 and the second reference value L2 may be set in advance based on a user's operation and input via the operating portion 17.

The various types of data include an operating pattern of the driving unit 2c, as operation details of the driving unit 2c. An example of the operating pattern of the driving unit 2c is an accelerating and decelerating pattern of the driving unit 2c to cause the conveying bar 13 to convey the object W such that the position or speed of the object W becomes a desired position or speed. The operating pattern of the driving unit 2c is, for example, defined as chronological change in the applied current of the driving unit 2c for the time that has lapsed from the start time. The applied current of the driving unit 2c is properly increased or decreased such that the position or speed of the object W becomes a desired position or speed.

The load detector 9c acquires a load (conveying load) applied onto the driving unit 2c. The conveying load is a load corresponding to the force with which the conveying bar 13 pushes the object W. The force with which the conveying bar 13 pushes the object W corresponds to frictional force generated between the placing surface 12a of the measuring plate 12 and the object W, when the conveying bar 13 pushes and conveys the object W from the measuring plate 12 to the packaging unit 10. The driving unit 2c is supplied with a current to drive the conveying bar 13 against the frictional force.

Accordingly, the load detector 9c herein acquires a conveying load based on the intensity of the applied current of the driving unit 2c. The applied current of the driving unit 2c depends on the weight of the object W and whether the object W is packaged with the film F1, F2. The intensity of the applied current of the driving unit 2c may be directly detected with an ammeter (not illustrated) provided on the driving unit 2c, or may be a current value (command value) in controlling the driving unit 2c by the controller 9a. The load detector 9c transmits load information relating to the acquired conveying load to the judging unit 9d.

The judging unit 9d is configured to judge that the driving unit 2c is in the overload state, when the conveying load acquired by the load detector 9c is equal to or larger than the reference load. The judging unit 9d is capable of adjusting the reference load to at least two levels, that is, the first reference value L1 and the second reference value L2. The judging unit 9d is a circuit configured to perform adjustment of the reference load to at least in two levels, the first reference value L1 and the second reference value L2. The adjustment of the reference value includes setting a reference load pattern such that the reference load changes while the driving unit 2c is conveying the object W. The adjustment of the reference load includes setting the reference load pattern for each conveyance performed by the driving unit 2c. The reference load pattern is defined as, for example, chronological change in reference load for the time that has lapsed from the start time. The reference load pattern is set in accordance with a load factor changing the conveying load (described later in detail). The judging unit 9d transmits information indicating a judgment result as to whether the driving unit 2c is in the overload state to the controller 9a.

The film sensor 9e performs image processing on the photographed image photographed by the camera 14, to sense whether the object W is packaged with the film F1, F2. An ordinary method can be used for the sensing performed by the film sensor 9e. The film sensor 9e transmits information indicating a sensing result as to whether the object W is packaged with the film F1, F2 to the controller 9a.

The control unit 9 thus configured refers to various types of data in the storage unit 9b and, based on the weight or the like of an object W measured by the measuring carrying-in mechanism 2, calculates the price of the object W, for example. The control unit 9 controls operation of the label printer LP and the label issuing device LI, and prints the weight or the price of the object W on a label.

### Operation of Packaging Apparatus 1

The following schematically describes operation of the packaging apparatus 1.

In the packaging apparatus 1, when a user places an object W on the measuring plate 12 of the measuring carrying-in mechanism 2, the weight of the object W is measured by the measuring scale 2a, and photographed by the camera 14. The object W is conveyed by the conveying bar 13, and pushed out onto the support members 33 of the lifter mechanism 30. In conveyance by the conveying bar 13, when the conveying load exceeds the reference load, the conveying bar 13 is urgently stopped by the controller 9a.

Meanwhile, the film F1, F2 is transferred to the film conveyance mechanism 6 by the film delivery mechanism 5, and the film F1, F2 is cut by the cutter mechanism 7 into a sheet of rectangular film F1, F2. The film F1, F2 is conveyed to above the lifter mechanism 30 by the feeder units 61 and 62, and both side portions thereof in the width direction are tensionally held.

Against the film F1, F2 thus tensionally held, the object W is pushed up by the lifter mechanism 30, and the film F1, F2 is stretched so as to cover the object W. The periphery of the film F1, F2 is folded over the lower side of the tray T by the folding mechanism 37. The object W is pushed out toward the seal mechanism 8 by the discharging pusher 79a. Subsequently, the film F1, F2 is heat-sealed by the seal mechanism 8, and is then discharged onto the discharge table 82.

When a process including label pasting is performed, the price and the weight, for example, of the product G calculated based on the measured value are printed on a label by the label printer LP, and this label is pasted on the film F1, F2 by the label issuing device LI.

### Adjustment of Reference Load

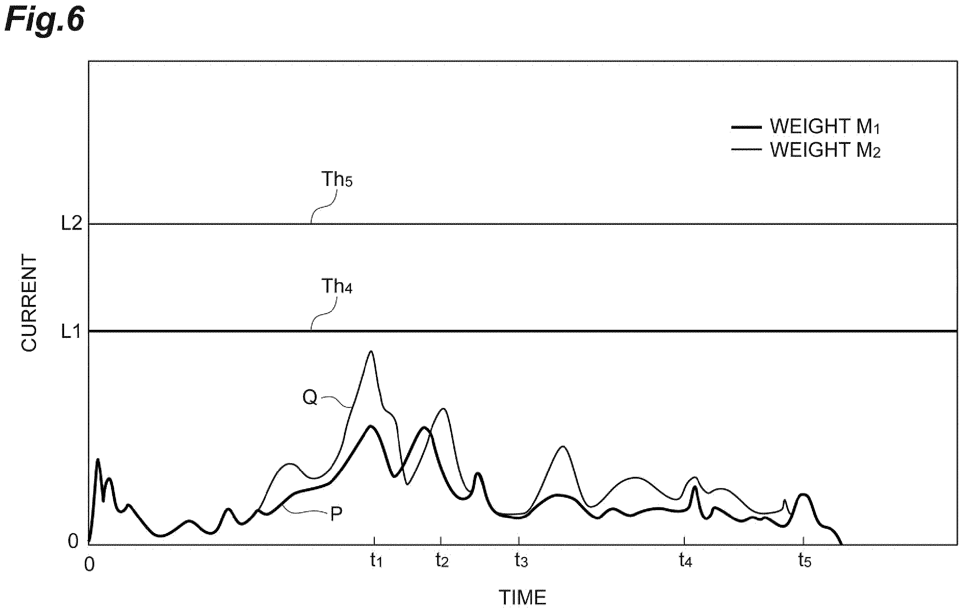

The following is explanation of adjustment of the reference load, with reference to FIG. 5 and FIG. 6. FIG. 5 is a diagram illustrating an example of adjustment of the reference load. FIG. 6 is a diagram illustrating another example of adjustment of the reference load.

In FIG. 5 and FIG. 6, the abscissa indicates the time that has lapsed from the time (hereinafter simply referred to as "time 0") at which the conveying bar 13 starts moving from the initial position. The ordinate indicates the conveying load (for example, the applied current of the driving unit 2c). In FIG. 5 and FIG. 6, a bold solid line P indicates chronological change in the conveying load in the case of conveying the object W with a weight M₁. A thin solid line Q indicates chronological change in the conveying load in the case of conveying the object W with a weight M₂. The weight M₂ is heavier than the weight M₁. In FIG. 5, a broken line R indicates chronological change in the conveying load in the case of conveying the object W packaged with the film F1, F2 and with a weight M₂.

The conveying load corresponding to the force with which the conveying bar 13 pushes the object W is applied onto the driving unit 2c. The force with which the conveying bar 13 pushes the object W corresponds to the frictional force generated between the placing surface 12a of the measuring plate 12 and the object W while the conveying bar 13 is pushing and conveying the object W from the measuring plate 12 to the packaging unit 10. Accordingly, the conveying load chronologically changes in accordance with the frictional force.

The frictional force generated between the placing surface 12a of the measuring plate 12 and the object W changes according to the weight of the object W. Specifically, the conveying load changes according to the weight of the object W serving as a physical factor (load factor) relating to the object W. The frictional force generated between the placing surface 12a of the measuring plate 12 and the object W changes according to whether the object W is packaged with the film F1, F2. Specifically, whether the object W is packaged with the film F1, F2 serves as a load factor changing the conveying load.

The conveying load corresponding to the operation details (such as the operating pattern) of the driving unit 2c is applied onto the driving unit 2c. The driving unit 2c incurs the conveying load according to the inertial weight or the like of the driving unit 2c. Accordingly, the conveying load chronologically changes according to the operation details of the driving unit 2c. Specifically, the operation details of the driving unit 2c serves as a load factor changing the conveying load.

In FIG. 5 and FIG. 6, in a period from the time 0 to time t₁, the object W that is placed and stands still starts moving. In a period from the time t₁ to the time t₃, the object W that has started moving is accelerated and conveyed toward the packaging unit 10. In a period from the time t₃ to the time t₄, the object W is conveyed toward the packaging unit 10 at substantially fixed speed. After the time t₄, at time t₅, the object W reaches the packaging unit 10.

First, the following is explanation of an example of setting a reference load pattern such that the reference load changes while the conveying bar 13 is conveying the object W, with reference to FIG. 5. As illustrated in FIG. 5, the conveying load fluctuates (increases and decreases) with a lapse of the time from the time 0, for each of the bold solid line P, the thin solid line Q, and the broken line R. As an example, the fluctuation of the conveying load corresponds to fluctuation of the intensity of the applied current of the driving unit 2c in accordance with the operation details of the driving unit 2c serving as a load factor.

For this reason, the judging unit 9d sets a reference load pattern Th₁, a reference load pattern Th₂, and a reference load pattern Th₃ such that the reference load changes in a stepped manner while the driving unit 2c is conveying the object W. In each of the reference load patterns Th₁ to Th₃, the reference load chronologically changes in accordance with the operation details of the driving unit 2c. With this configuration, even when the conveying load fluctuates while the conveying bar 13 is conveying the object W, the controller 9a is enabled to stop the operation of the conveying bar 13 using a proper reference load in accordance with the operation details of the driving unit 2c.

The fluctuation tendency of the conveying load exhibits substantially similar tendency for the time that has lapsed from the time 0, for each of the bold solid line P, the thin solid line Q, and the broken line R. However, the conveying load herein is different for each of the bold solid line P, the thin solid line Q, and the broken line R. As an example, the difference in conveying load corresponds to fluctuation of the frictional force generated between the placing surface 12a of the measuring plate 12 and the object W. Specifically, the conveying load differs due to fluctuation of the frictional force according to at least one of the weight of the object W and whether the object W is packaged with the film F1, F2, serving as the load factors.

For example, because the frictional force generated between the placing surface 12a of the measuring plate 12 and the object W increases as the weight of the object W increases, the conveying load (thin solid line Q) in the case of conveying the object W with the weight M₂ tends to be larger than the conveying load (bold solid line P) in the case of conveying the object W with the weight M₁. For example, because the frictional force generated between the placing surface 12a of the measuring plate 12 and the object W packaged with the film F1, F2 is larger than the frictional force for the object W that is not packaged with the film F1, F2, the conveying load (broken line R) in the case of conveying the object W packaged with the film F1, F2 and with the weight M₂ tends to be larger than the conveying load (thin solid line Q) in the case of conveying the object W with the weight M₂.

For this reason, the judging unit 9d sets the reference load patterns Th₁ to Th₃ such that the reference load changes according to the weight of the object W. As the weight of the object W, information indicating the weight of the object W that is output from the measuring scale 2a of the measuring carrying-in mechanism 2 is used. The reference load of the reference load pattern Th₂ in the case of conveying the object W with the weight M₂ may be larger than the reference load of the reference load pattern Th₁ in the case of conveying the object W with the weight M₁. For example, the reference load of the reference load pattern Th₂ is set larger than the reference load of the reference load pattern Th₁ in the period from the time t₁ to the time t₂. With the configuration, even when the conveying load of the driving unit 2c differs (for example, the conveying load at the time t₁) according to the weight of the object W, the controller 9a is enabled to stop the operation of the conveying bar 13 using a proper load in accordance with the weight of the object W.

The judging unit 9d sets the reference load patterns Th₁ to Th₃ such that the reference load changes according to whether the object W is packaged with the film F1, F2. The film detector 9e detects whether the object W is packaged with the film F1, F2. The reference load of the reference load pattern Th₃ in the case of conveying the object W packaged with the film F1, F2 and with the weight M₂ may be larger than the reference load of the reference load pattern Th₂ in the case of conveying the object W with the weight M₂. For example, the reference load of the reference load pattern Th₃ is set larger than the reference load of the reference load pattern Th₂ in the period from the time t₁ to the time t₃. With the configuration, even when the conveying load of the driving unit 2c differs (for example, the conveying load in the period from the time t₁ to the time t₂) according to whether the object W is packaged with the film F1, F2, the controller 9a is enabled to stop the operation of the conveying bar 13 using a proper load in accordance with whether the object W is packaged with the film F1, F2.

The following is explanation of an example of setting a reference load for each conveyance performed by the conveying bar 13, with reference to FIG. 6. In the packaging apparatus 1, there are cases where the weight of the object W placed on the measuring plate 12 fluctuates for each conveyance performed by the conveying bar 13. For example, suppose that an object W with the weight M₁ and an object W with the weight M₂ are alternately packaged by the packaging apparatus 1 for respective conveyances performed by the conveying bar 13. In this case, as described above, because the frictional force generated between the placing surface 12a of the measuring plate 12 and the object W increases as the weight of the object W increases, the conveying load of the driving unit 2c alternately fluctuates for respective conveyances performed by the conveying bar 13.

For this reason, as illustrated in FIG. 6, the judging unit 9d sets reference load patterns Th₄ and Th₅ such that the reference load changes for each conveyance performed by the conveying bar 13. In particular, the judging unit 9d sets the reference load patterns Th₄ and Th₅ such that the reference load changes according to the weight of the object W that alternately fluctuates for respective conveyances performed by the conveying bar 13. Specifically, the reference load of the reference load pattern Th₅ in the case of conveying the object W with the weight M₂ may be larger than the reference load of the reference load pattern Th₄ in the case of conveying the object W with the weight M₁. With the configuration, even when the conveying load of the driving unit 2c differs for each conveyance performed by the conveying bar 13, the controller 9a is enabled to use a proper load in accordance with the operation of the driving unit 2c. In the example of FIG. 6, to simplify the explanation, the judging unit 9d sets the reference load patterns Th₄ and Th₅ such that the reference loads are fixed, but similar to the example of FIG. 5, the judging unit 9d may set the reference load patterns such that the reference loads chronologically fluctuate while the conveying bar 13 is conveying the object W.

As explained above, in the packaging apparatus 1 according to the present embodiment, the judging unit 9d is enabled to performs adjustment of the reference load at least in two levels, the first reference value L1 and the second reference value L2 that is a load different from the first reference value L1. In a conventional packaging apparatus, the reference load to judge the overload state is set as a single fixed value based on the maximum conveying load among the loads from the start of conveyance to the end of conveyance, although the load (conveying load) applied onto the conveyance unit in accordance with the operation of the conveyance unit fluctuates from the start to the end of conveyance. Accordingly, for example, in the case where the conveying load is small, the conventional packaging apparatus may come to the state in which a difference (surplus load) between the reference load and the conveying load increases in conveyance, that is, the state where the conveying load is hard to reach the reference load and causes deterioration in safety.

By contrast, with the packaging apparatus 1, the reference load can be adjusted at least in two levels, the first reference value L1 and the second reference value L2 that is a load different from the first reference value L1. This configuration enables setting of the surplus load to a proper load in comparison with the case where the reference load is set to a fixed value (a single fixed value). This configuration enables the judging unit 9d to properly judge that the driving unit 2c is in the overload state. Consequently, this configuration enhances the safety in conveyance of the object W by the conveying bar 13.

With the packaging apparatus 1, even when the conveying load fluctuates while the conveying bar 13 is conveying the object W, the judging unit 9d is enabled to judge that the driving unit 2c is in the overload state using proper reference load patterns Th₁ to Th₅ in accordance with the operation of the driving unit 2c. Consequently, this configuration enhances the safety in conveyance of the object W by the conveying bar 13.

With the packaging apparatus 1, even when the conveying load fluctuates for each conveyance performed by the conveying bar 13, the judging unit 9d is enabled to judge that the driving unit 2c is in the overload state using a proper reference load in accordance with the operation of the driving unit 2c. Consequently, this configuration more securely enhances the safety in conveyance of the object W by the conveying bar 13.

The conveying load applied onto the driving unit 2c changes according to a physical factor (load factor) relating to the driving unit 2c or the object W. With the packaging apparatus 1, the judging unit 9d is enabled to judge that the driving unit 2c is in the overload state using a proper reference load in accordance with the physical factor (load factor) relating to the driving unit 2c or the object W. Consequently, this configuration more securely enhances the safety in conveyance of the object W by the conveying bar 13.

The conveying load applied onto the driving unit 2c changes according to the weight of the object W. With the packaging apparatus 1, the judging unit 9d is enabled to judge that the driving unit 2c is in the overload state using a proper reference load in accordance with the weight of the object W. Consequently, this configuration more securely enhances the safety in conveyance of the object W by the conveying bar 13.

The conveying load applied onto the driving unit 2c changes according to the operation details of the driving unit 2c. With the packaging apparatus 1, the judging unit 9d is enabled to judge that the driving unit 2c is in the overload state using a proper reference load in accordance with the operation details of the driving unit 2c. Consequently, this configuration more securely enhances the safety in conveyance of the object W by the conveying bar 13.

With the packaging apparatus 1, the controller 9a stops the operation of the driving unit 2c, when the judging unit 9d judges that the driving unit 2c is in the overload state. This configuration further enhances the safety in conveyance of the object W by the conveying bar 13.

### Modification

One embodiment of the present disclosure has been described above, but the present disclosure is not limited to the embodiment described above. In the embodiment described above, as an example, the judging unit 9d judges that the driving unit 2c is in the overload state when the continuous time for which the applied current of the driving unit 2c exceeds the reference load continues and exceeds a certain time, but, for example, the judging unit 9d may judge that the driving unit 2c is in the overload state when cumulative time in which the applied current of the driving unit 2c exceeds the reference load continues and exceeds a certain time. The judging unit 9d may judge that the driving unit 2c is in the overload state when the applied current of the driving unit 2c reaches the reference load.

In the embodiment described above, the operating pattern of the driving unit 2c is defined as chronological change in the applied current of the driving unit 2c for the time that has lapsed from the start time (time 0 in FIG. 5 and FIG. 6), but, for example, the operating pattern may be defined as chronological change in the applied current of the driving unit 2c for a displacement amount of the conveying bar 13 from the initial position.

The conveying load of the driving unit 2c is not limited to the applied current of the driving unit 2c. For example, the conveying load of the driving unit 2c may be the electric power to drive the driving unit 2c, the torque output from the driving unit 2c, or the followability of the driving unit 2c for a predetermined operating pattern, or the like.

In the embodiment described above, the film sensor 9e senses whether the object W is packaged with the film F1, F2 based on the photographed image photographed by the camera 14, but the film sensor 9e may sense whether the object W is packaged with the film F1, F2, by estimating the frictional force generated between the placing surface 12a of the measuring plate 12 and the object W from fluctuation of the conveying load of the driving unit 2c when the conveying bar 13 contacts the object W.

At least parts of the embodiment described above may be used in combination as desired.

The packaging apparatus according to an aspect of the present disclosure includes a placing unit on which an object to be packaged is placed, a packaging unit configured to package the object to be packaged, a conveyance unit configured to convey the object to be packaged that is placed on the placing unit to the packaging unit, a detector configured to acquire a load applied onto the conveyance unit, and a judging unit configured to judge that the conveyance unit is in an overload state when the load acquired by the detector is equal to or higher than a reference load, wherein the judging unit is capable of performing adjustment of the reference load at least in two levels, a first reference value and a second reference value that is a load different from the first reference value.

The packaging apparatus having the configuration described above is capable of adjusting the reference load at least in two levels, the first reference value and the second reference value that is a load different from the first reference value. With the configuration, in the judging unit, the surplus load has a proper value in comparison with the case where the reference value is set to the fixed value. This configuration enables proper judgment that the conveyance unit is in the overload state. Consequently, this configuration enhances the safety in conveyance.

With the packaging apparatus according to an aspect of the present disclosure, the reference load is set in accordance with a load factor changing the magnitude of the load applied onto the conveyance unit.

The magnitude of the load applied onto the conveyance unit changes according to a physical factor (load factor) relating to the conveyance unit or the object to be packaged. The packaging apparatus enables judgment that the conveyance unit is in the overload state using a proper reference load in accordance with the physical factor (load factor) relating to the conveyance unit or the object to be packaged. Consequently, the safety in conveyance is enhanced.

## Claims

1. A packaging apparatus (1) comprising:
a placing unit (12) on which an object to be packaged (W) is placed;
a packaging unit (3) configured to package the object to be packaged (W);
a conveyance unit (2, 13) configured to convey the object to be packaged (W) that is placed on the placing unit (12) to the packaging unit (3);
a detector (9c) configured to acquire a conveying load applied onto the conveyance unit (2, 13);
and
a judging unit (9d) configured to judge that the conveyance unit (2, 13) is in an overload state when the conveying load acquired by the detector (9c) is equal to or higher than a reference load;
**characterized in that**:
the packaging apparatus further comprises a measuring scale (12) configured to measure the weight of the object to be packaged (W), or a film sensor (9e) configured to sense whether the object to be packaged (W) is packaged with a film (F1, F2); and
wherein the judging unit (9d) is adapted to set the reference load at least in two levels, a first reference value and a second reference value that is a load different from the first reference value, wherein the reference load is set in accordance with the corresponding weight of the object to be packaged (W) or whether the object to be packaged (W) is packaged with a film (F1, F2).

2. The packaging apparatus (1) according to claim 1, wherein
the judging unit (9d) is adapted to set the reference load such that the reference load changes while the conveyance unit (2, 13) is conveying the object to be packaged (W).

3. The packaging apparatus according to claim 1 or 2, wherein the judging unit (9d) is adapted to set the reference load for each conveyance performed by the conveyance unit (2, 13).

4. The packaging apparatus according to any one of claims 1 to 3, wherein the judging (9d) unit is adapted to set the reference load in accordance with a load factor changing a conveyance load applied onto the conveyance unit (2, 13).

5. The packaging apparatus according to claim 4, wherein the load factor is a weight of the object to be packaged (W).

6. The packaging apparatus according to claim 4 or 5, wherein the conveyance unit (2, 13) comprises a driving unit (2c), and wherein the applied current of the driving unit (2c) is varied in accordance with the load factor.

7. The packaging apparatus according to any one of claims 1 to 6 further comprising a control unit (9) configured to stop the operation of the conveyance unit (2, 13) when the judging unit (9d) judges that the conveyance unit (2, 13) is in the overload state.

## Patentansprüche

1. Verpackungsvorrichtung (1), die Folgendes umfasst:
eine Ablegeeinheit (12), auf der ein zu verpackender Gegenstand (W) abgelegt wird;
eine Verpackungseinheit (3), die dazu konfiguriert ist, den zu verpackenden Gegenstand (W) zu verpacken;
eine Fördereinheit (2, 13), die dazu konfiguriert ist, den zu verpackenden Gegenstand (W), der auf der Ablegeeinheit (12) abgelegt ist, zu der Verpackungseinheit (3) zu fördern;
einen Detektor (9c), der dazu konfiguriert ist, eine auf die Fördereinheit (2, 13) ausgeübte Förderlast zu erfassen; und
eine Urteilungseinheit (9d), die dazu konfiguriert ist, zu urteilen, dass sich die Fördereinheit (2, 13) in einem Überlastzustand befindet, wenn die von dem Detektor (9c) erfasste Förderlast gleich einer oder höher als eine Bezugslast ist;
**dadurch gekennzeichnet, dass**:
die Verpackungsvorrichtung weiter Folgendes umfasst: eine Messwaage (12), die dazu konfiguriert ist, das Gewicht des zu verpackenden Gegenstands (W) zu messen, oder einen Foliensensor (9e), der dazu konfiguriert ist, zu erkennen, ob der zu verpackende Gegenstand (W) mit einer Folie (F1, F2) verpackt ist; und
wobei die Urteilungseinheit (9d) dazu angepasst ist, die Bezugslast mindestens in zwei Stufen einzustellen, einem ersten Bezugswert und einem zweiten Bezugswert, bei dem es sich um eine von dem ersten Bezugswert verschiedene Last handelt, wobei die Bezugslast gemäß Folgendem eingestellt wird: dem entsprechenden Gewicht des zu verpackenden Gegenstands (W) oder, ob der zu verpackende Gegenstand (W) mit einer Folie (F1, F2) verpackt ist.

2. Verpackungsvorrichtung (1) nach Anspruch 1, wobei die Urteilungseinheit (9d) dazu angepasst ist, die Bezugslast derart einzustellen dass sich die Bezugslast ändert, während die Fördereinheit (2, 13) den zu verpackenden Gegenstand (W) fördert.

3. Verpackungsvorrichtung nach Anspruch 1 oder 2, wobei die Urteilungseinheit (9d) dazu angepasst ist, die Bezugslast für jede von der Fördereinheit (2, 13) ausgeführte Förderung einzustellen.

4. Verpackungsvorrichtung nach einem der Ansprüche 1 bis 3, wobei die Urteilungseinheit (9d) dazu angepasst ist, die Bezugslast gemäß einem Lastfaktor einzustellen, der eine auf die Fördereinheit (2, 13) ausgeübte Förderlast ändert.

5. Verpackungsvorrichtung nach Anspruch 4, wobei es sich bei dem Lastfaktor um ein Gewicht des zu verpackenden Gegenstands (W) handelt.

6. Verpackungsvorrichtung nach Anspruch 4 oder 5, wobei die Fördereinheit (2, 13) eine Antriebseinheit (2c) umfasst, und wobei der angelegte Strom der Antriebseinheit (2c) gemäß dem Lastfaktor variiert wird.

7. Verpackungsvorrichtung nach einem der Ansprüche 1 bis 6, weiter umfassend eine Steuereinheit (9), die dazu konfiguriert ist, den Betrieb der Fördereinheit (2, 13) zu unterbrechen, wenn die Urteilungseinheit (9d) urteilt, dass sich die Fördereinheit (2, 13) in dem Überlastzustand befindet.

## Revendications

1. Un appareil d'emballage (1) composé des éléments suivants :
un groupe de positionnement (12) sur lequel vient se placer un objet à emballer (W) ;
un groupe d'emballage (3) configuré pour assurer l'emballage de l'objet à emballer (W) :
un groupe d'acheminement (2, 13) configuré pour acheminer l'objet à emballer (W) qui est placé sur le groupe de positionnement (12) jusqu'au groupe d'emballage (3) ;
un détecteur (9c) configuré pour acquérir une charge d'acheminement s'appliquant au groupe d'acheminement (2, 13) ;
et
un groupe de détermination (9d) configuré pour déterminer que le groupe d'acheminement (2, 13) est en surcharge lorsque la charge d'acheminement acquise par le détecteur (9c) est égale ou supérieure à une charge de référence ;
et **se caractérisant par le fait que** :
l'appareil d'emballage comporte en outre une échelle de mesure (12) configurée pour mesurer le poids de l'objet à emballer (W) ou un capteur de film (9e) configuré pour détecter si l'objet à emballer (W) est emballé avec un film (F1, F2) et
ce groupe de détermination (9d) est adapté pour programmer la charge de référence à au moins deux niveaux : une première valeur de référence et une deuxième valeur de référence qui est une charge différente de la première valeur de référence, et cette charge de référence est programmée en fonction du poids correspondant de l'objet à emballer (W) ou si l'objet à emballer (W) est ou non emballé avec un film (F1, F2).

2. L'appareil d'emballage (1) qui est décrit dans la revendication 1, si ce n'est que le groupe de détermination (9d) est adapté pour programmer la charge de référence de façon à ce que cette charge de référence change lorsque le groupe d'acheminement (2, 13) assure l'acheminement de l'objet à emballer (W).

3. L'appareil d'emballage qui est décrit dans la revendication 1 ou 2, si ce n'est que le groupe de détermination (9d) est adapté pour programmer la charge de référence pour chaque acheminement réalisé par le groupe d'acheminement (2, 13).

4. L'appareil d'emballage qui est décrit dans l'une des revendications 1 à 3, si ce n'est que le groupe de détermination (9d) est adapté pour programmer la charge de référence en fonction d'un facteur de charge qui change la charge d'acheminement qui s'applique au groupe d'acheminement (2, 13).

5. L'appareil d'emballage qui est décrit dans la revendication 4, si ce n'est que le facteur de charge est un poids de l'objet à emballer (W).

6. L'appareil d'emballage qui est décrit dans la revendication 4 ou 5, si ce n'est que le groupe d'acheminement (2, 13) comporte un groupe de transmission (2c) et si ce n'est que le courant qui est appliqué à ce groupe de transmission (2c) varie en fonction du facteur de charge.

7. L'appareil d'emballage qui est décrit dans l'une des revendications 1 à 6, si ce n'est qu'il y a en outre un groupe de commande (9) qui est configuré pour arrêter le fonctionnement du groupe d'acheminement (2, 13) lorsque le groupe de détermination (9d) identifie le fait que le groupe d'acheminement (2, 13) est en surcharge.
